# EUROPÄISCHE PATENTSCHRIFT

(11) **EP 1 744 923 B1**
(45) Veröffentlichungstag und Bekanntmachung des Hinweises auf die Patenterteilung: **26.06.2013**
(21) Anmeldenummer: 05747530.3
(22) Anmeldetag: 27.04.2005
(51) Int. Cl.: B60J 7/20

(54) **CABRIOLETVORRICHTUNG FÜR EIN FAHRZEUG**
CABRIOLET DEVICE FOR A VEHICLE
DISPOSITIF CABRIOLET POUR UN VEHICULE

(30) Priorität: 27.04.2004 DE 102004020639
(43) Veröffentlichungstag der Anmeldung: 24.01.2007
(73) Patentinhaber: Valmet Automotive Oy, 23500 Uusikaupunki (FI)
(72) Erfinder: BUNSMANN, Winfried, 49143 Bissendorf (DE); MAASS, Joachim, 49143 Bissendorf (DE); SCHONHORST, Heiko, 49492 Westerkappeln (DE)
(74) Vertreter: Kronthaler, Schmidt & Coll.
(86) Internationale Anmeldenummer: PCT/DE2005/000781
(87) Internationale Veröffentlichungsnummer: WO 2005/102756

(56) Entgegenhaltungen:
- DE-A1- 10 021 464
- DE-A1- 10 162 303
- DE-A1- 10 339 274

## Beschreibung

Die Erfindung betrifft eine Cabrioletvorrichtung für ein Fahrzeug, welche Cabrioletvorrichtung ein zwischen einer Schließstellung und einer zusammengelegten abgesenkten Offenstellung bewegbarem Verdeck und eine Trennwand enthält, die bei am Fahrzeug montierter Cabrioletvorrichtung das Verdeck zumindest in dessen zusammengelegter Offenstellung zumindest teilweise vom Inneren eines Gepäckraums des Fahrzeugs trennt.

Aus der DE 197 13 606 C1 ist ein Cabriolet-Fahrzeug mit einer Betätigungseinrichtung für einen verstellbaren Verdeckkastenboden bekannt, der das zusammengelegte Verdeck vom Gepäckraum trennt und Wandelemente aufweist, die derart gelenkig miteinander verbunden sind, dass der Verdeckkastenboden oder wenigstens ein Wandelement davon in eine Tieflage und in eine Hochlage verstellbar ist. Zum Verstellen des Verdeckkastenbodens ist an einer dem Gepäckraum zugewandten Fläche eines Wandelements ein Handgriff befestigt, der vom offenen Gepäckraum her ergriffen werden kann und ein Verstellen des Verdeckkastenbodens von der Tieflage in die Hochlage und umgekehrt ermöglicht. Bei dem bekannten Cabriolet-Fahrzeug ist es somit möglich, einen Verdeckkasten zur Aufnahme des zusammengelegten, offenen Verdecks bei geschlossenem Verdeck in eine Hochlage zu bewegen, so dass der Gepäckraum vergrößert ist. Oberhalb des Verdeckkastens ist eine Hutablage vorgesehen, die bei geschlossenem Verdeck den Fahrzeuginnenraum vom Verdeckkasten beziehungsweise Kofferraum abtrennt.

Aus der EP 0 356 640 B1 ist ein absenkbares Verdeck für ein Cabriolet-Fahrzeug bekannt, das in seiner zusammengelegten Offenstellung in einem in den Kofferraum einragenden Verdeckkasten aufgenommen ist, der sich aus einem Boden und aufrechten Seitenwandungen zusammensetzt und zumindest abschnittsweise aus elastischem, nachgiebigem Material besteht. In Schließstellung des Verdecks ist der beispielsweise aus einem starren Boden und ziehharmonikaartig ausgebildeten Seitenwänden bestehende Verdeckkasten in Höhenrichtung zusammenschiebbar. Durch die Zusammenschiebbarkeit wird der Gepäckraum des Fahrzeugs bei geschlossenem Verdeck nur wenig beeinträchtigt. Oberhalb des Verdeckkastens ist ein Hutablageteil vorgesehen, das den Innenraum des Fahrzeugs von dem Verdeckkasten beziehungsweise dem Kofferraum trennt.

Das Dokument DE 10162303 offenbart den Oberbegriff des Anspruchs 1

Der Erfindung liegt die Aufgabe zugrunde, ein Verdeck für ein Cabriolet-Fahrzeug zu schaffen, das bei einfachem Aufbau in eine zusammengelegte, abgesenkte Offenstellung bewegbar ist, in der es vor Beschädigungen durch im Gepäckraum befindliche Gegenstände geschützt ist, und in dessen Schließstellung der Fahrzeuginnenraum vom Gepäckraum durch eine Hutablage getrennt ist.

Diese Aufgabe wird mit den Merkmalen des Anspruchs 1 gelöst.

Die Unteransprüche sind auf vorteilhafte Ausführungsformen und Weiterbildungen des erfindungsgemäßen Verdecks gerichtet.

Erfindungsgemäß ist ein gesonderter Verdeckkasten nicht erforderlich, da die Hutablage, die beim Öffnen des Verdecks zusammen mit dessen hinterem und unterem Rand abgesenkt wird, die Funktion zumindest des Bodens eines Verdeckkastendeckels übernimmt.

Die Erfindung wird im Folgenden anhand schematischer Zeichnungen beispielsweise und mit weiteren Einzelheiten erläutert.

In den Figuren stellen dar:
- Fig. 1: schematisch einen Längsschnitt durch ein Cabriolet-Fahrzeug im hinteren Bereich des Verdecks bei geschlossenem Verdeck,
- Fig. 2: die Ansicht der Figur 1 bei teilweise geöffnetem Verdeck,
- Fig. 3: die Ansicht der Figur 1 bei vollständig geöffnetem Verdeck,
- Fig. 4: eine Detailansicht aus der Figur 1,
- Fig. 5: schematisch einen Querschnitt durch einen Teilbereich eines Cabrioletfahrzeugs einer weiteren Ausführungsform der Erfindung und
- Fig. 6: eine Ansicht ähnlich der Fig. 5 einer abgeänderten Ausführungsform.

Im Folgenden bezeichnet der Begriff vorne die Fahrtrichtung des Fahrzeugs, hinten die rückwärtige Richtung und seitlich die seitlichen Richtungen eines Fahrzeugs.

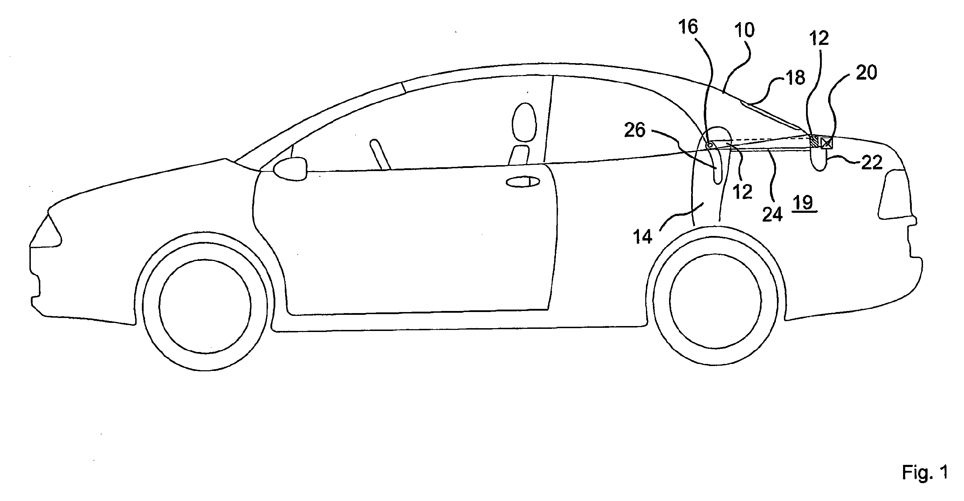

Gemäß Figur 1, die schematisch einen Längsschnitt durch einen Bereich eines Fahrzeugs zeigt, enthält eine Cabrioletvorrichtung ein insgesamt mit 10 bezeichnetes zusammenfalt- oder zusammenklappbares Verdeck, dessen hinterer unterer Randbereich an einem Verdeckbügel 12 befestigt ist, der das hintere Ende des Fahrzeuginnenraums in Höhe der Gürtellinie einer Fahrzeugkarosserie umgreift und an seitlichen Karosseriekonsolen 14 mittels je eines Scharniers 16 befestigt ist, so dass der Verdeckbügel 12 insgesamt um eine in Querrichtung des Fahrzeugs verlaufende Achse schwenkbar ist. Mit 18 ist ein im Verdeck 10 enthaltenes Rückfenster bezeichnet. 19 bezeichnet einen im hinteren Bereich des Fahrzeugs befindlichen Gepäckraum.

Der Verdeckbügel 12 wird von einem Karosserierand 20 umgriffen, der beispielsweise ein Strukturteil zur Versteifung des Heckbereichs des Fahrzeugs bildet. Gemäß Figur 1 schließt sich rechts an den Karosserierand 20 beispielsweise eine Heckklappe an, nach deren Öffnung der Gepäckraum 19 zugänglich ist.

Zur Abdichtung des Spaltes zwischen dem Verdeckbügel 12 beziehungsweise dem Rand des Verdecks 10 und der Karosserie ist an dem Verdeckbügel 12 einerseits und dem Karosserierand 20 andererseits ein Manschettenteil 22 aus flexiblem Material befestigt, das in der Anordnung gemäß Figur 1 beispielsweise eine Regenrinne bildet, die über nicht dargestellte Abläufe entwässert ist.

Die von dem Verdeckbügel 12 umschlossene Fläche wird von einem Hutablageteil 24 überdeckt, das von oben oder unten in den Verdeckbügel eingesetzt ist und dessen Vorderrand derart geformt ist, dass es beispielsweise im Zustand gemäß Figur 1 mit Rücksitzen (nicht dargestellt) des Fahrzeugs abschließt. Auf diese Weise ist im Zustand der Figur 1 (geschlossenes Verdeck 10) der Innenraum des Fahrzeugs vom Gepäckraum durch das Hutablageteil 24 getrennt.

Ein nicht dargestellter Gelenk- und Spriegelmechanismus zum Spannen und Zusammenlegen des Verdecks 10 ist im Belieben des Fachmanns in an sich bekannter Weise derart aufgebaut, dass sich die beidseitig des Fahrzeugs angeordneten Scharniere 16 im geschlossenen Zustand des Verdecks 10 in der Stellung gemäß Figur 1 befinden, in der der Verdeckbügel 12 etwa waagrecht in Höhe der Karosseriebrüstung angeordnet ist, so dass der Verdeckunterrand sich etwa in Höhe des sich anschließenden Bereichs der Karosserieaußenhaut befindet.

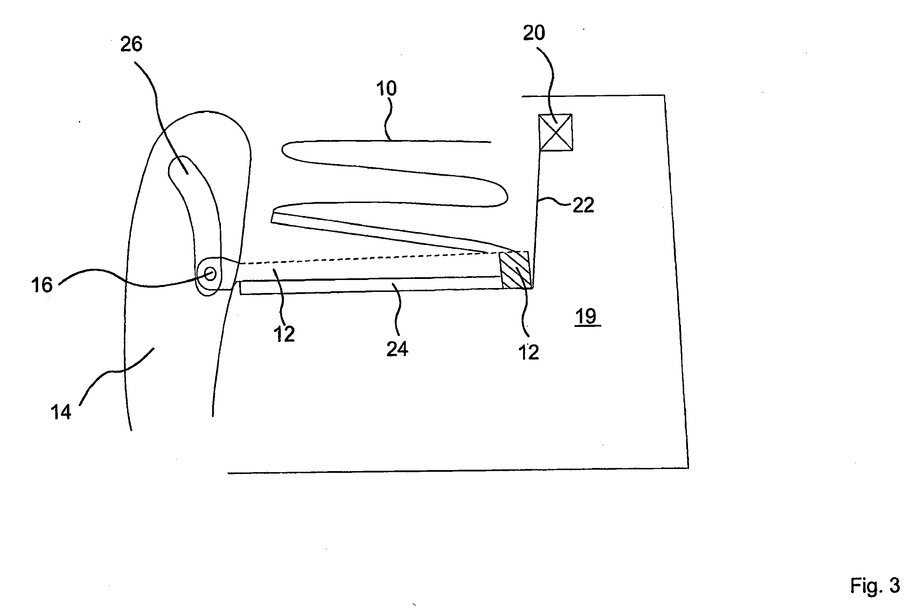

Beim Öffnen des Verdecks 10, das mechanisch oder motorisch geschehen kann, wird der Verdeckbügel 12 in Uhrzeigerrichtung verschwenkt, wobei das Scharnier 16 sich in Führungen 26 abwärts bewegt, die in den Karosseriekonsolen 14 ausgebildet sind. Durch die Absenkung des Verdeckbügels 12 ändert das flexible Manschettenteil 22 seine Form und bildet bei vollständig geöffnetem Verdeck 10 (Figur 3) zusammen mit dem mit dem Verdeckbügel 12 abgesenkten Hutablageteil 24 eine Trennwand, die das abgesenkte und zusammengelegte Verdeck vom Inneren des Gepäckraums 19 trennt.

Die geschilderte Absenkung des Verdeckbügels 12 beim Öffnen des Verdecks 10 kann der Verdecköffnung passiv folgen, da in Folge der dann nicht mehr vorhandenen Spannung des Verdecks 10 sich der Verdeckbügel 12 insgesamt nach unten bewegt, bis er in Anlage an das Ende der Führungen 26 gelangt. Beim Schließen des Verdecks 10 wird der Verdeckbügel 12 angehoben, so dass sich das Scharnier 16 vorteilhaft durch einen Bolzen, in der Führung 26 geführt, aufwärts bis zu einem oberen Anschlag bewegt und der Verdeckbügel 12 durch Anlage an einem nicht dargestellten Anschlag nicht weiter in Gegenuhrzeigerrichtung aufwärts schwenken kann als in Figur 1 dargestellt.

Mit der beschriebenen Konstruktion wird mittels des Hutablageteils 24 und des Manschettenteils 22 die Wirkung eines Verdeckkastens erzielt, ohne dass gesonderte Bauteile dafür erforderlich sind und im geschlossenen Zustand des Verdecks das Volumen des Gepäckraums beeinträchtigt wird.

Es versteht sich, dass die beschriebene Konstruktion in unterschiedlichster Weise abgeändert werden kann, ohne dass der grundlegende Gedanke der Erfindung verlassen wird, das Hutablageteil 24 beim Öffnen des Verdecks abzusenken, so dass es einen Boden für ein Verdeckfach bildet, das das abgesenkte und zusammengelegte Verdeck gemäß Figur 3 aufnimmt. Das Verdeck kann vollständig oder teilweise flexibel, beispielsweise aus Stoff sein, und oder aus gegenseitig verschwenkbaren, in sich starren Plattenteilen zusammengesetzt sein.

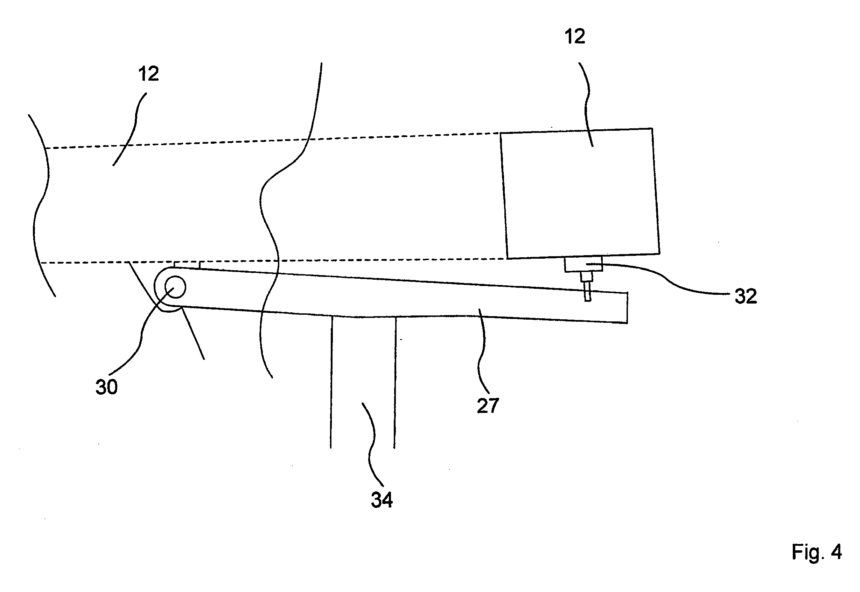

Figur 4 zeigt eine im Detail abgeänderte Ausführungsform der Erfindung. Gemäß Figur 4 ist eine Hutablageplatte 27 in ihrem vorderen Bereich mittels Scharnieren 30 schwenkbar mit den Armen des Verdeckbügels 12 verbunden, wobei vorteilhafterweise in die Scharniere 30 Torsionsfedern integriert sind, die die Hutablageplatte 27 entgegen Uhrzeigerrichtung vorspannen. Der gemäß Figur 4 rechte Bereich der Hutablageplatte 27 liegt an einem Kontaktschalter 32 an, der an dem Verdeckbügel 12 befestigt ist. Die normalerweise vorhandene Anlagekraft ist derart, dass der Kontaktschalter 32 nicht betätigt wird. Wenn beim Absenken des Verdeckbügels 12 die Hutablageplatte 27 in Anlage an einen in dem Gepäckraum liegenden Gegenstand (34) kommt, wird auf den Kontaktschalter 32 eine verstärkte Kraft ausgeübt, so dass er betätigt wird und ein Warnsignal auslöst und/oder eine motorische Betätigung des Verdecköffnungsmechanismus außer Betrieb setzt, so dass Beschädigungen vermieden werden.

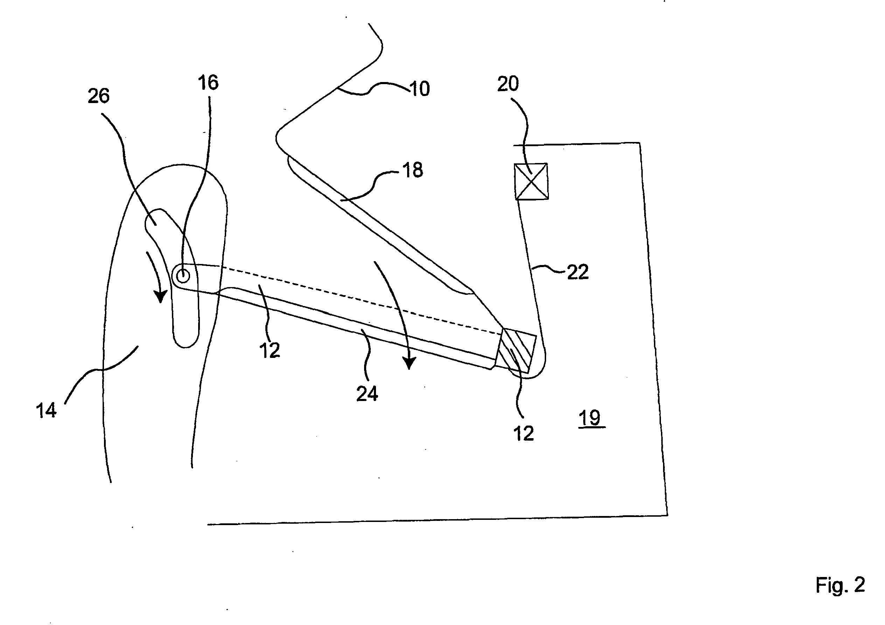

Die Hutablageplatte 27, kann die Funktion des Hutablageteils 24 der Ausführungsform gemäß Fig. 1 bis 3 übernehmen, oder kann als zusätzliches Bauteil zum Hutablageteil 24 vorgesehen sein. Im ersteren Fall ist das Manschettenteil 22 an der Hutablageplatte 27 befestigt.

Die Ausführungsform gemäß Fig. 4 kann in vorteilhafter Weise abgeändert werden. Beispielsweise kann die Unterseite der Hutablage als flächiger Folienschalter ausgebildet sein, so dass auf diese Weise eine Sensoreinrichtung zum Erfassen sperriger Güter geschaffen ist, die gegebenenfalls eine motorische Betätigung eines Verdecköffnungsmechanismus außer Betrieb setzt und Beschädigungen vermeidet.

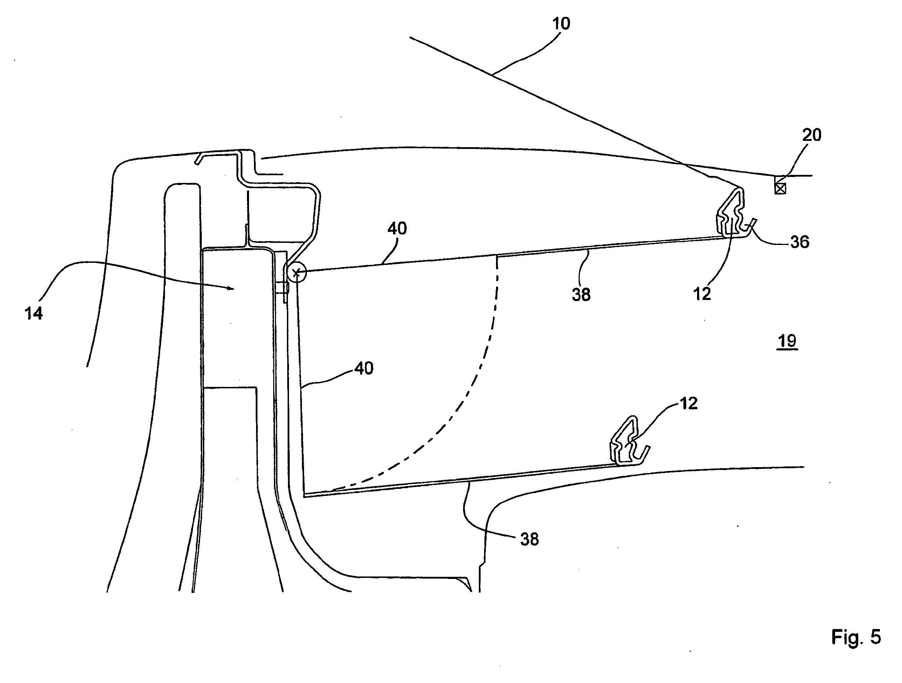

Fig. 5 zeigt eine weitere Ausführungsform der Erfindung, wobei Teile, die Teilen vorhergehender Figuren entsprechen, mit gleichen Bezugszeichen belegt sind.

Gemäß Fig. 5 ist der Verdeckbügel 12, der das hintere Ende der im Bereich der Gürtellinie ausgeschnittenen Fahrzeugkarosserie bügel- bzw. U-förmig übergreift, mittels eines nicht dargestellten Mehrgelenkmechanismus in an sich bekannter Weise schwenkbar mit den seitlichen Karosseriekonsolen 14 verbunden. Um das rückwärtige Ende des Verdeckbügels 12 läuft eine Regenrinne 36 um, um Wasser, das von dem Verdeck 10 abläuft, aufzunehmen und nach außen abzuleiten.

Je nach Erstreckung des Verdeckbügels 12 ist zumindest mit dessen hinterem Bereich ein Hinterteil 38 einer Hutablage starr verbunden, deren Vorderteil am Hinterrand mit dem Vorderrand des Hinterteils 38 und an dem Vorderrand beidseitig mit den Karosseriekonsolen 14 und/oder einem Karosseriequerträger verbunden ist. Das Hinterteil 38 ist beispielsweise durch eine starre Platte gebildet, die scharnierartig mit dem ebenfalls als Platte ausgebildeten Vorderteil 40 verbunden ist, dessen Vorderrand um eine karosseriefeste, quer der Fahrzeuglängsrichtung verlaufende Achse schwenkbar ist.

Wie dargestellt, bilden das Vorderteil 40 und das Hinterteil 38 bei geschlossenem Verdeck 10 eine Hutablage, die den Kofferraum 19 nach oben zum Fahrzeuginnenraum hin abschließt.

Die Kinematik der Bewegung des Verdeckbügels 12 beim Öffnen des Verdecks 10 ist im dargestellten Beispiel derart, dass sich der Vorderrand des Hinterteils 38 auf einer Kreisbogenlinie (gestrichelt dargestellt) mit der fahrzeugfesten Schwenkachse des Vorderteils 40 als Mittelpunkt bewegt, so dass das Vorderteil 40 um etwa 90° nach unten verschwenkt wird und seine Verbindung mit dem Hinterteil 38 abgeknickt ist. Das in Offenstellung nicht dargestellte, zusammengelegte Verdeck 10 befindet sich über dem Hinterteil 38 und hinter dem Vorderteil 40. Um das Verdeck gegen den wegen des zusammengelegten Verdecks eingeschränkten Gepäckraum zu schützen, kann, ähnlich wie bei der Ausführungsform gemäß Fig. 1, zwischen dem Spann- bzw. Verdeckbügel 12 eine Manschette aus flexiblem Material vorgesehen sein.

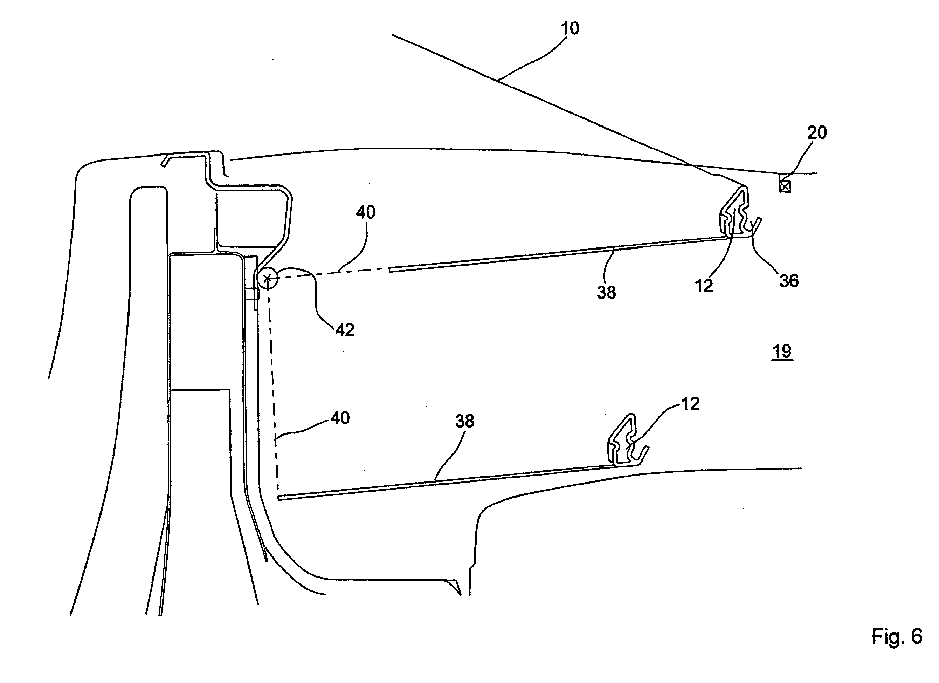

Fig. 6 zeigt eine abgeänderte Ausführungsform, die sich von der Fig. 5 dadurch unterscheidet, dass das Vorderteil 40 aus flexiblem Material, beispielsweise einem Gewebe, besteht und dass der Vorderrand 40 des Vorderteils auf eine Wickelwelle 42 aufwickelbar ist, so dass Abstandsänderungen zwischen dem Vorderrand des Hinterteils 38 und der Achse der Wickelwelle 42 beim Öffnen und Schließen des Verdecks durch elastische Vorspannung der Wickelwelle 42 in Aufwickelrichtung ausgeglichen werden.

Das Hinterteil 38 muss nicht zwingend als in sich starre Platte ausgebildet sein; es kann auch durch ein Gewebe gebildet sein, das längs seines Umfangsrandes (mit Ausnahme des Vorderrandes) mit dem Verdeckbügel 12 verbunden ist. Bei der Ausführungsform gemäß Fig. 5 können das Vorderteil 40 und das Hinterteil 38 beispielsweise mittels eines Filmscharniers miteinander verbunden sein.

**BEZUGSZEICHENLISTE**

| | | | |
|---|---|---|---|
| 10 | Verdeck | 12 | Verdeckbügel |
| 14 | Karosseriekonsole | 16 | Scharnier |
| 18 | Rückfenster | 19 | Gepäckraum |
| 20 | Karosserierand | 22 | Manschettenteil |
| 24 | Hutablageteil | 26 | Führung |
| 27 | Hutablageplatte | 30 | Scharnier |
| 32 | Kontaktschalter | 34 | Gegenstand |
| 36 | Regenrinne | 38 | Hinterteil |
| 40 | Vorderteil | 42 | Wickelwelle |

## Patentansprüche

1. Cabrioletvorrichtung für ein Fahrzeug, welche Cabrioletvorrichtung ein zwischen einer Schließstellung und einer zusammengelegten, abgesenkten Offenstellung bewegbares Verdeck (10) und eine Trennwand (22, 24; 27) enthält, die bei am Fahrzeug montierter Cabrioletvorrichtung das Verdeck zumindest in dessen zusammengelegter Offenstellung zumindest teil-- weise vom Inneren eines Gepäckraums (19) des Fahrzeugs trennt, wobei
zumindest ein Teilbereich der Trennwand (22, 24; 27) durch ein Hutablageteil (24; 27; 38, 40) gebildet ist, das in Schließstellung des Verdecks den Fahrzeuginnenraum vom Gepäckraum (19) trennt, **dadurch gekennzeichnet, dass** das Hutablageteil sich beim Bewegen des Verdecks in dessen Offenstellung zusammen mit dem hinteren, unteren Randbereich des Verdecks abwärts bewegt, so dass das zusammengelegte Verdeck oberhalb des Hutablageteils angeordnet ist.

2. Cabrioletvorrichtung nach Anspruch 1,
**dadurch gekennzeichnet,**
**dass** der hintere, untere Rand des Verdecks (10) an einem Verdeckbügel (12) befestigt ist, der bei am Fahrzeug montierter Cabrioletvorrichtung das hintere Ende des Fahrzeuginnenraums umgreift und an seinen beiden vorderen Enden gelenkig mit der Fahrzeugkarosserie verbunden ist, und das Hutablageteil (24; 27; 38, 40) derart geformt und angeordnet ist, dass es zumindest einen Teil der von dem Verdeckbügel begrenzten Fläche überdeckt.

3. Cabrioletvorrichtung nach Anspruch 2,
**dadurch gekennzeichnet,**
**dass** Scharniere (16), mit denen die vorderen Enden des Verdeckbügels (12) an der Fahrzeugkarosserie befestigbar sind, derart ausgebildet sind, dass sie sich beim Öffnen des Verdecks längs der Fahrzeugkarosserie abwärts bewegen.

4. Cabrioletvorrichtung nach Anspruch 3,
**dadurch gekennzeichnet,**
**dass** die Scharniere (16) in karosseriefesten Führungen (26) beweglich sind.

5. Cabrioletvorrichtung nach einem der Ansprüche 1 bis 4,
**dadurch gekennzeichnet,**
**dass** bei am Fahrzeug montierter Cabrioletvorrichtung ein Spalt zwischen dem hinteren, unteren Rand des Verdecks (10) und dem benachbartem Rand (20) der Karosserie durch eine flexible Wand (22) verschlossen ist.

6. Cabrioletvorrichtung nach Anspruch 2,
**dadurch gekennzeichnet,**
**dass** das Hutablageteil ein hinteres, starr mit zumindest dem hinteren Bereich des Verdeckbügels (12) verbundenes Hinterteil (38) und ein Vorderteil (40) aufweist, das zwischen dem vorderen Rand des Hinterteils und einem fahrzeugfesten Bereich angeordnet ist, der bei geschlossenem Verdeck (10) den vorderen, oberen Endbereich des Gepäckraums (19) bildet, wobei das geöffnete, zusammengelegte Verdeck oberhalb des Hinterteils angeordnet ist.

7. Cabriolet vorrichtung nach Anspruch 6,
**dadurch gekennzeichnet,**
**dass** das Vorderteil (40) aus flexiblem Material besteht.

8. Cabriolet vorrichtung nach Anspruch 7,
**dadurch gekennzeichnet,**
**dass** das Vorderteil (40) durch ein Rollo gebildet ist, das um eine Wickelwelle (42) auf- und abwickelbar ist.

9. Cabriolet vorrichtung nach Anspruch 6,
**dadurch gekennzeichnet,**
**dass** das Vorderteil (40) durch eine mit dem Vorderrand des Hinterteils und einem fahrzeugfesten Rahmenteil (14) schwenkbar verbundene Platte gebildet ist.

10. Cabrioletvorrichtung nach einem der Ansprüche 1 bis 9,
**dadurch gekennzeichnet,**
**dass** eine Sensoreinrichtung (27, 32) zum Erfassen eines im Gepäckraum (19) befindlichen, ein Absenken des Hutablageteils (24; 27; 38, 40) hinderndes Gegenstandes (34) vorgesehen ist.

11. Cabrioletvorrichtung nach Anspruch 10,
**dadurch gekennzeichnet,**
**dass** die Sensoreneinrichtung einen Kontaktschalter (32) enthält, der betätigt wird, wenn das Absenken des Hutablageteils (24) durch einen im Gepäckraum (19) befindlichen Gegenstand behindert wird.

12. Cabrioletvorrichtung nach Anspruch 11,
**dadurch gekennzeichnet,**
**dass** der Kontaktschalter (32) von einer Hutablageplatte (27) betätigt wird, die an ihrem anderen Endbereich um eine Schwenkachse schwenkbar angelenkt ist.

## Claims

1. A cabriolet device for a vehicle, said cabriolet device including a hood (10), which is movable between a closed position and a folded, lowered open position, and a bulkhead (22, 24; 27) which, when the cabriolet device is mounted to the vehicle, separates the hood, at least in its folded, open position, at least partially from the interior of a luggage compartment (19) of the vehicle, at least a partial area of the bulkhead (22, 24; 27) being formed by a parcel shelf element (24; 27; 38, 40) which separates the interior of the vehicle from the luggage compartment (19) in the closed position of the hood, **characterised in that** the parcel shelf element moves down together with the rear, lower edge region of the hood during the movement of the hood into its open position, so that the folded hood is arranged above the parcel shelf element.

2. The cabriolet device according to claim 1, **characterised in that** the rear, lower edge of the hood (10) is fastened to a hood bow (12), which engages around the rear end of the vehicle interior when the cabriolet device is mounted to the vehicle and which is articulated by its two front ends to the vehicle body, and the parcel shelf element (24; 27; 38, 40) is formed and arranged such that it covers at least part of the area delimited by the hood bow.

3. The cabriolet device according to claim 2, **characterised in that** hinges (16), by which the front ends of the hood bow (12) can be fastened to the vehicle body, are provided such that they move down along the vehicle body when opening the hood.

4. The cabriolet device according to claim 3, **characterised in that** the hinges (16) are movable in guides (26) fixed to the vehicle body.

5. The cabriolet device according to any one of claims 1 to 4, **characterised in that**, when the cabriolet device is mounted to the vehicle, a gap between the rear, lower edge of the hood (10) and the adjacent edge (20) of the vehicle body is closed by a flexible wall (22).

6. The cabriolet device according to claim 2, **characterised in that** the parcel shelf element comprises a rear part (38) rigidly connected to at least the rear portion of the hood bow (12) and a front part (40) which is arranged between the front edge of the rear part and a portion fixed to the vehicle, said portion forming the front, upper end portion of the luggage compartment (19) when the hood (10) is closed, and with the opened, folded hood being arranged above the rear part.

7. The cabriolet device according to claim 6, **characterised in that** the front part (40) consists of a flexible material.

8. The cabriolet device according to claim 7, **characterised in that** the front part (40) is formed by a blind, which can be wound around and unwound from a winding shaft (42).

9. The cabriolet device according to claim 6, **characterised in that** the front part (40) is formed by a plate which is connected in a pivoting manner to the front edge of the rear part and to a frame part (14) fixed to the vehicle.

10. The cabriolet device according to any one of claims 1 to 9, **characterised in that** sensor means (27, 32) are provided for detecting an object (34) present in the luggage compartment (19) and preventing the lowering of the parcel shelf element (24; 27; 38, 40).

11. The cabriolet device according to claim 10, **characterised in that** the sensor means include a contact switch (32), which is actuated when the lowering of the parcel shelf element (24) is obstructed by an object present in the luggage compartment (19).

12. The cabriolet device according to claim 11, **characterised in that** the contact switch (32) is actuated by a parcel shelf plate (27) which is articulated at its other end portion so as to pivot around a pivoting axis.

## Revendications

1. Dispositif cabriolet pour un véhicule, ledit dispositif cabriolet présentant une capote (10) qui est déplaçable entre une position fermée et une position ouverte, pliée et abaissée, ledit dispositif présentant en plus une paroi de séparation (22, 24; 27) qui, lorsque le dispositif cabriolet est monté au véhicule, sépare la capote, au moins dans sa position pliée et ouverte, au moins partiellement de l'intérieur d'un coffre à bagages (19) du véhicule, au moins une région partielle de la paroi de séparation (22, 24; 27) étant constituée par un élément de plage arrière (24; 27; 38, 40) qui sépare l'intérieur de véhicule du coffre à bagages (19) dans la position fermée de la capote, **caractérisé en ce que** l'élément de plage arrière se déplace vers le bas en même temps que la région de bord inférieure arrière de la capote lors du déplacement de la capote vers sa position ouverte, de sorte que la capote pliée soit disposée au-dessus de l'élément de plage arrière.

2. Dispositif cabriolet selon la revendication 1, **caractérisé en ce que** le bord inférieur arrière de la capote (10) est fixé à un étrier de capote (12), qui vient en prise autour de l'extrémité arrière de l'intérieur du véhicule, lorsque le dispositif cabriolet est monté au véhicule, et qui est articulé à la carrosserie par ses deux extrémités avant, et l'élément de plage arrière (24; 27; 38, 40) est réalisé et disposé de manière à couvrir au moins une partie de la surface délimitée par l'étrier de capote.

3. Dispositif cabriolet selon la revendication 2, **caractérisé en ce que** des charnières (16), par lesquelles on peut fixer les extrémités avant de l'étrier de capote (12) à la carrosserie, sont disposées de manière à se déplacer vers le bas sur la carrosserie lors de l'ouverture de la capote.

4. Dispositif cabriolet selon la revendication 3, **caractérisé en ce que** les charnières (16) sont déplaçables dans des guides (26) montés fixe à la carrosserie.

5. Dispositif cabriolet selon l'une quelconque des revendications 1 à 4, **caractérisé en ce que**, lorsque le dispositif cabriolet est monté au véhicule, un espace entre le bord inférieur arrière de la capote (10) et le bord adjacent (20) de la carrosserie est obturé par une paroi flexible (22).

6. Dispositif cabriolet selon la revendication 2, **caractérisé en ce que** l'élément de plage arrière comprend une partie arrière (38), qui est reliée de manière rigide avec au moins la région arrière de l'étrier de capote (12), et une partie avant (40), qui est disposée entre le bord avant de la partie arrière et une région fixée au véhicule et constituant la région d'extrémité supérieure avant du coffre à bagages (19) lorsque la capote (10) est fermée, la capote ouverte et pliée étant disposée au-dessus de ladite partie arrière.

7. Dispositif cabriolet selon la revendication 6, **caractérisé en ce que** la partie avant (40) est constituée d'un matériau flexible.

8. Dispositif cabriolet selon la revendication 7, **caractérisé en ce que** la partie avant (40) est constitué par un store que l'on peut enrouler sur et dérouler d'un arbre d'enroulement (42).

9. Dispositif cabriolet selon la revendication 6, **caractérisé en ce que** la partie avant (40) est réalisée par une plaque reliée de manière pivotante au bord avant de la partie arrière et à un élément de cadre (14) monté fixe au véhicule.

10. Dispositif cabriolet selon l'une quelconque des revendications 1 à 9, **caractérisé en ce que** l'on prévoit un dispositif à capteurs (27, 32) destiné à détecter un objet (34) se trouvant dans le coffre à bagages (19) et bloquant l'abaissement de l'élément de plage arrière (24; 27; 38, 40).

11. Dispositif cabriolet selon la revendication 10, **caractérisé en ce que** le dispositif à capteurs présente un interrupteur à contact (32), qui est actionné lorsque l'abaissement de l'élément de plage arrière (24) est bloqué par un objet se trouvant dans le coffre à bagages (19).

12. Dispositif cabriolet selon la revendication 11, **caractérisé en ce que** l'interrupteur à contact (32) est actionné par une plaque de plage arrière (27) qui est articulée par son autre région d'extrémité de manière à permettre son pivotement autour d'un axe de pivotement.
